# EUROPÄISCHE PATENTSCHRIFT

(11) **EP 1 424 516 B1**
(45) Veröffentlichungstag und Bekanntmachung des Hinweises auf die Patenterteilung: **05.01.2011**
(21) Anmeldenummer: 03024312.5
(22) Anmeldetag: 24.10.2003
(51) Int. Cl.: F16H 57/04, F16H 48/28

(54) **Differential für Kraftfahrzeuge mit optimierter Wärmeleitfähigkeit**
Differential mechanism for a vehicle with optimized thermal conductivity
Différentiel pour véhicule automobile dont la conductivité thermique est optimisée

(30) Priorität: 29.11.2002 DE 10255720
(43) Veröffentlichungstag der Anmeldung: 02.06.2004
(73) Patentinhaber: AUDI AG, 85045 Ingolstadt (DE)
(72) Erfinder: Märkl, Johann, 85128 Nassenfels (DE); Barnreiter, Karl, 85122 Hitzhofen (DE)
(74) Vertreter: Asch, Konrad

(56) Entgegenhaltungen:
- EP-A2- 0 067 639
- EP-A2- 1 004 799
- DE-A1- 4 035 624
- DE-A1- 19 607 077
- US-A- 2 859 641

## Beschreibung

Die Erfindung betrifft ein Differential für Kraftfahrzeuge mit einem Antriebselement und mit Abtriebselementen, die in einem mittels einer Hülse gekapselten Ausgleichsgehäuse angeordnet von Schmieröl beaufschlagt sind; vgl. DE 40 35 624 C2.

Durch solche Kapselungen werden die Montageöffnungen der Ausgleichsgehäuse öldicht verschlossen um sicherzustellen, dass den im Ausgleichsgehäuse gelagerten Schneckenrädern stets eine vorbestimmte Schmierölmenge zur Verfügung steht. Auch wird durch diese Kapselung ein Ölplanschen der Ausgleichsgehäuse in dem das Ausgleichsgehäuse umfassenden Getriebegehäuse vermieden, da das Ausgleichsgehäuse bei einer solchen Ausbildung im Getriebegehäuse oberhalb des Ölsumpfes gelagert werden kann.

Unabhängig davon, ob das Schmieröl in das Ausgleichsgehäuse zu- und abgeführt oder aber als Lebensdauerfüllung ausgebildet ist, muss die während des Betriebes des Differentials entstehende Wärme abgeführt werden, was bei einer Lebensdauerfüllung besonders problematisch ist.

Darüber hinaus ist die bekannte Ausbildung der Kapselung der Ausgleichsgehäuse in mehrteiliger Form als Ringhülse mit Abdeckung aufwendig in der Herstellung und in der Montage.

Aufgabe der Erfindung ist es, ein Differential so zu kapseln, dass eine optimale Wärmeleitfähigkeit erzielbar ist, um Wärme an das Umgebungsmedium abzugeben, insbesondere bei Rotation des Ausgleichsgehäuses in einem ölfreien Raum.

Ausgehend von einem Differential der eingangs genannten Art ist diese Aufgabe gemäß der Erfindung dadurch gelöst, dass die Hülse innen oder außen ein oberflächenvergrößertes Profil aufweist bestehend aus einem Material mit einer Wärmeleitfähigkeit besser als Stahl.

Hierzu ist die Hülse als Wellrohr ausgebildet, deren nicht gewellten Randbereiche mit den korrespondierend zugewandten Bereichen des Ausgleichsgehäuses öldicht verbunden sind.

Nach einem weiteren Merkmal der Erfindung sind die ungewellten Randbereiche des Wellrohrs mittels Sicken und/oder Bördelung mit den korrespondierend zugewandten Bereichen des Ausgleichsgehäuses verbunden.

Vorteilhaft ist es, wenn erfindungsgemäß der Bördelung in den Randbereichen von Wellrohr und Ausgleichsgehäuse jeweils ein O-Ring zugeordnet ist und das Wellrohr aus einem hochwärmeleitenden Material, vorzugsweise Aluminium besteht.

Die erfindungsgemäße Ausbildung hat, wie Versuche bestätigt haben, eine signifikante Verbesserung der Wärmeabfuhr zur Folge und ist, wie sich aus der nachfolgenden Beschreibung ergibt, verblüffend einfach herzustellen. Ein weiterer Vorteil ist das geringe Gewicht.

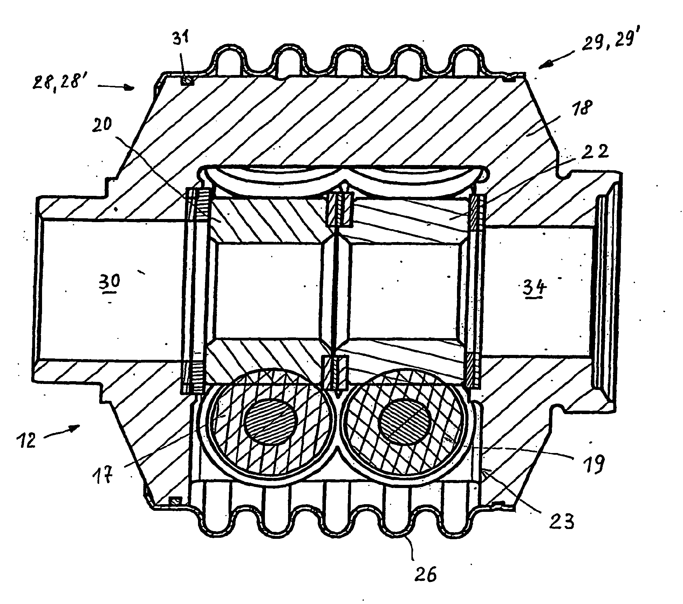

Die Erfindung ist nachfolgend anhand eines in der Zeichnung dargestellten Ausführungsbeispiels beschrieben.

In der einzigen (nicht maßstäblichen) Zeichnung ist ein in einem nicht dargestellten Getriebegehäuse drehbar gelagertes Ausgleichsgehäuse 18 eines sogenannten Torsen-Differential dargestellt, wie es beispielsweise in der US-PS 2,859,641 beschrieben und dargestellt ist.

In dem von zentrischen Bohrungen 30, 34 durchsetzten Ausgleichsgehäuse 18 von kreisförmigem Querschnitt sind Schneckenräder 17 und 19 drehbar gelagert, die mit abtriebsseitigen Schneckenrädern 20 und 22 in Eingriff stehen und ein Differential 12 bilden. Die zugehörigen Abtriebswellen sowie die Antriebswelle sind der Übersicht halber nicht dargestellt.

Für die Montage der genannten Schneckenräder weist das Ausgleichsgehäuse 18 ein die zylindrische Umfangsfläche unterbrechende einseitig offene Öffnung 23 auf, die nach dem Einbau der Schneckenräder zu verschließen ist. Hierzu dient eine den Außenumfang des Ausgleichsgehäuses umfassende Hülse 26, die in den nicht gewellten Bereichen 28 und 29 mit den korrespondierend zugeordneten Randbereichen 28', 29' des Ausgleichsgehäuses 18 mit diesem öldicht verbunden ist.

Zwecks guter Wärmeabfuhr ist die Hülse 26 als relativ dünnwandiges Wellrohr ausgebildet und in den nicht gewellten Bereichen 28 und 29 entweder mittels Bördelung 28 - siehe linke Seite der Zeichnung - oder mit einer Sickenverbindung 29 - siehe rechte Seite der Zeichnung - mit der in diesem Bereichen ununterbrochenen äußeren Umfangsfläche des Ausgleichsgehäuses fest verbunden.

Jeder Verbindung kann in Abhängigkeit der erforderlichen Dichtwirkung ein O-Ring oder ähnliches Dichtmittel zur Verbesserung der Dichtwirkung zugeordnet werden.

Das Fügen des Wellrohres erfolgt mittels eines geteilte Backen aufweisenden Aufpresswerkzeuges und ist, da nicht zur Erfindung gehörend, nicht dargestellt.

Die Füllung des von der Hülse umschlossenen Lagerraumes des Ausgleichsgehäuses erfolgt in üblicher hier nicht dargestellter Weise, wobei ein Füllstand bis etwa zur Höhe der nicht dargestellten den Bohrungen 30 und 34 zugeordneten Abtriebswellen erreicht ist.

Das als Hülse 26 dienende dünnwandige Wellrohr ist zwecks guter Wärmeabfuhr aus einem gut wärmeleitenden Material - z.B. aus Aluminium - gefertigt.

### BEZUGSZEICHENLISTE

- 12: Differential
- 17: Schneckenräder
- 18: Ausgleichsgehäuse
- 19: Schneckenräder
- 20: Schneckenräder
- 22: Schneckenräder
- 23: Öffnung
- 26: Hülse
- 28: Randbereich - Bördelung
- 28': Randbereich
- 29: Randbereich - Sicke
- 29': Randbereich
- 30: Bohrungen
- 31: O-Ring
- 34: Bohrungen

## Patentansprüche

1. Differential für Kraftfahrzeuge mit einem Antriebselement und mit Abtriebselementen, die in einem mittels einer Hülse gekapselten Ausgleichsgehäuse angeordnet von Schmieröl beaufschlagt sind, **dadurch gekennzeichnet, dass** die Hülse (26) innen oder außen ein oberflächenvergrößerndes Profil aufweist und aus einem Material mit einer Wärmeleitfähigkeit besser als Stahl besteht und, dass die Hülse (26) als Wellrohr oder Faltenbalg ausgebildet ist, deren nicht gewellte Randbereiche (28, 29) mit den korrespondierend zugewandten Bereichen des Ausgleichsgehäuses (18) verbunden sind.

2. Differential nach Anspruch 1, **dadurch gekennzeichnet, dass** die nicht gewellten Randbereiche (28, 29) der als Wellrohr oder Faltenbalg ausgebildeten Hülse (26) mittels einer Bördelung (28) mit den korrespondierend zugewandten Bereichen (28', 29') des Ausgleichsgehäuses (18) verbunden sind.

3. Differential nach Anspruch 1, **dadurch gekennzeichnet, dass** der Bördelung der Randbereiche (28, 28', 29, 29') der als Wellrohr oder Faltenbalg ausgebildeten Hülse (26) und Ausgleichsgehäuse (18) jeweils ein O-Ring (31) zugeordnet ist.

4. Differential nach den Ansprüchen 1 bis 3, **dadurch gekennzeichnet, dass** die als Wellrohr oder Faltenbalg ausgebildete Hülse (26) aus Aluminium besteht.

## Claims

1. Differential for motor vehicles having a drive input element and having drive output elements which are arranged in a differential housing encapsulated by a sleeve and are acted on by lubricating oil, **characterized in that** the sleeve (26) has a surface-enlarging profile on the inside or on the outside and is composed of a material with a thermal conductivity better than that of steel, and **in that** the sleeve (26) is designed as a corrugated pipe or bellows whose non-corrugated edge regions (28, 29) are connected to the correspondingly facing regions of the differential housing (18).

2. Differential according to Claim 1, **characterized in that** the non-corrugated edge regions (28, 29) of the sleeve (26) which is designed as a corrugated pipe or bellows are connected to the correspondingly facing regions (28', 29') of the differential housing (18) by means of a flanged portion (28).

3. Differential according to Claim 1, **characterized in that** the flanged portion of the edge regions (28, 28', 29, 29') of the sleeve (26), which is designed as a corrugated pipe or bellows, and differential housing (18) is assigned in each case one O-ring (31).

4. Differential according to Claims 1 to 3, **characterized in that** the sleeve (26) which is designed as a corrugated pipe or bellows is composed of aluminium.

## Revendications

1. Différentiel pour véhicules automobiles comprenant un élément d'entraînement et des éléments de prise de force, qui sont disposés dans un boîtier de compensation encapsulé au moyen d'un manchon et qui sont sollicités par de l'huile de lubrification, **caractérisé en ce que** le manchon (26) présente, à l'intérieur ou à l'extérieur un profil augmentant la surface et se compose d'un matériau ayant une conductibilité thermique meilleure que celle de l'acier, et **en ce que** le manchon (26) est réalisé sous forme de tube ondulé ou de soufflet dont les régions de bord non ondulées (28, 29) sont connectées aux régions du boîtier de compensation (18) tournées de manière correspondante.

2. Différentiel selon la revendication 1, **caractérisé en ce que** les régions de bord non ondulées (28, 29) du manchon (26) réalisé sous forme de tube ondulé ou de soufflet sont connectées au moyen d'un rabattage (28) aux régions (28', 29') tournées de manière correspondante du boîtier de compensation (18).

3. Différentiel selon la revendication 1, **caractérisé en ce que** l'on associe à chaque fois un joint torique (31) au rabattage des régions de bord (28, 28', 29, 29') du manchon (26) réalisé sous forme de tube ondulé ou de soufflet et au boîtier de compensation (18).

4. Différentiel selon les revendications 1 à 3, **caractérisé en ce que** le manchon (26) réalisé sous forme de tube ondulé ou de soufflet se compose d'aluminium.
